Europäisches Patentamt

European Patent Office

Office européen des brevets

(19)

(11) **EP 1 443 673 A1**

(12) ## DEMANDE DE BREVET EUROPEEN

(43) Date de publication:
04.08.2004 Bulletin 2004/32

(51) Int Cl.[7]: **H04B 1/707**

(21) Numéro de dépôt: **04290210.6**

(22) Date de dépôt: **27.01.2004**

(84) Etats contractants désignés:
**AT BE BG CH CY CZ DE DK EE ES FI FR GB GR HU IE IT LI LU MC NL PT RO SE SI SK TR**
Etats d'extension désignés:
**AL LT LV MK**

(30) Priorité: **29.01.2003 FR 0300983**

(71) Demandeur: **Nortel Networks Limited**
**St. Laurent, Quebec H4S 2A9 (CA)**

(72) Inventeurs:
• **Abdi, Moussa**
**75015 Paris (FR)**

• **El Nahas El Homsi, Hassan**
**75015 Paris (FR)**
• **Jard, Alexandre**
**92150 Suresnes (FR)**
• **Corbel, Jean-Marc**
**75015 Paris (FR)**

(74) Mandataire: **Loisel, Bertrand**
**Cabinet Plasseraud**
**65/67 rue de la Victoire**
**75440 Paris Cedex 09 (FR)**

(54) **Procede et dispositif de reception multi-utilisateur**

(57) Le signal reçu comporte des contributions de plusieurs canaux multiplexés par des codes d'étalement respectifs. Après avoir estimé des paramètres de réponse des canaux, on calcule des estimations souples des symboles transmis. On répartit alors ces symboles entre un premier ensemble de symboles vérifiant un critère de confiance appliqué aux estimations souples calculées et un second ensemble de symboles ne vérifiant pas ce critère. Un signal modifié est déterminé en retranchant du signal reçu des contributions estimées correspondant aux symboles du premier ensemble. On calcule de nouvelles estimations souples des symboles du second ensemble seulement, en fonction du signal modifié et des paramètres de réponse estimés, ce qui peut être fait avec un algorithme de détection de nature plus complexe, notamment multi-utilisateurs, grâce à la réduction de taille effectuée en se restreignant aux symboles du second ensemble.

FIG. 1

**Description**

La présente invention concerne les techniques de radiocommunication numérique utilisant un accès multiple à répartition par codes (CDMA, « Code-Division Multiple Access »).

Un signal CDMA traité par un récepteur a pour expression, après filtrage et transposition en bande de base :

$$y(t) = \sum_{u=1}^{U} y^u(t) + n(t) \qquad (1)$$

où $n(t)$ est un bruit additif et $U$ est le nombre de canaux multiplexés sur la porteuse CDMA, dont les contributions $y^u(t)$ ont pour expression générale :

$$y^u(t) = \sum_i b_i^u . s_i^u(t-iT) \qquad (2)$$

où :

- $b_i^u$ est le symbole d'information de rang $i$ transmis sur le $u$-ième canal ;

- $s_i^u(t)$ est un code généralisé donné par la convolution de la réponse impulsionnelle du $u$-ième canal avec la portion correspondant au symbole $b_i^u$ du code d'étalement $c^u$ affecté au canal.

Le nombre $U$ correspond aux nombre d'utilisateur si chaque utilisateur considéré dispose d'un seul canal. Il peut toutefois y avoir plusieurs canaux par utilisateur.

Les codes d'étalement $c^u$ sont des séquences d'échantillons discrets appelés « chips », à valeurs réelles ($\pm$ 1) ou complexes ($\pm 1 \pm j$), ayant une cadence de chips donnée. Les symboles $b_i^u$ sont également à valeurs réelles ($\pm$ 1) ou complexes ($\pm 1 \pm j$). La durée d'un symbole sur un canal est un multiple de la durée du chip, le rapport entre les deux étant le facteur d'étalement $Q$ du canal.

Dans certains systèmes, le facteur d'étalement peut varier d'un canal à un autre. Dans un tel cas, on considère un facteur d'étalement commun $Q$ égal au plus grand commun diviseur (PGCD) des $U$ facteurs d'étalement $Q^u$. Un symbole sur le canal $u$ est alors considéré comme la concaténation de $Q^u/Q$ symboles consécutifs $b_i^u$ dont les valeurs sont identiques.

La durée de la réponse généralisée $s_i^u(t)$ correspond à $Q+W-1$ chips si $W$ désigne la longueur de la réponse impulsionnelle exprimée en nombre de chips.

En échantillonnant à la cadence des chips le signal CDMA $y(t)$ reçu pour un bloc de $n$ symboles sur chacun des canaux, le récepteur obtient des échantillons complexes qu'on peut modéliser par un vecteur $Y$ de $n \times Q+W-1$ composantes :

$$Y = A.b + N \qquad (3)$$

où :

- $b$ désigne un vecteur-colonne de taille $n \times U$, qu'on peut décomposer en

$$b^T = \left(b_1^T, b_2^T, \cdots, b_n^T\right),$$

$(.)^T$ représentant l'opération de transposition, les vecteurs $b_i$ étant de taille $U$ pour $1 \le i \le n$, avec

$$b_i^T = \left(b_i^1, b_i^2, \cdots, b_i^U\right) \; ;$$

- N est un vecteur de bruit aléatoire de taille $n \times Q+W-1$ ;
- $A = (A_1, A_2, ..., A_n)$ est une matrice de codes généralisés de taille $(n \times Q+W-1) \times (n \times U)$ qu'on peut subdiviser en n sous-matrices $A_i$ de taille $(n \times Q+W-1) \times U$. Dans la matrice $A_i$ ($1 \leq i \leq n$), la u-ième colonne ($1 \leq u \leq U$) est une convolution de la réponse impulsionnelle du u-ième canal et des Q échantillons du code d'étalement du u-ième canal correspondant au i-ième symbole du bloc.

En d'autres termes, les matrices $A_i$ s'écrivent :

$$A_i = \left(\Omega_i^1, \Omega_i^2, \cdots, \Omega_i^U\right) \qquad (4)$$

avec :

$$\Omega_i^u = M_i^u . H_i^u \qquad (5)$$

où $M_i^u$ est une matrice de Toeplitz de taille $(n \times Q+W-1) \times (n \times Q+W-Q)$ obtenue à partir des valeurs $c_i^u(q)$ des chips du code d'étalement $c^u$ du u-ième canal pendant la durée du i-ième bit du bloc :

$$M_i^u = \begin{pmatrix} c_i^u(1) & 0 & \cdots & 0 \\ c_i^u(2) & c_i^u(1) & \ddots & \vdots \\ & c_i^u(2) & \ddots & 0 \\ c_i^u(Q) & & \ddots & c_i^u(1) \\ 0 & c_i^u(Q) & & c_i^u(2) \\ \vdots & \ddots & \ddots & \vdots \\ 0 & \cdots & 0 & c_i^u(Q) \end{pmatrix} \qquad (6)$$

et $H_i^u$ est un vecteur-colonne de taille $(n-1) \times Q+W$ qui, lorsque les U canaux sont reçus de façon synchronisée, contient $(i-1) \times Q$ composantes à zéro, suivies par les W échantillons de la réponse impulsionnelle du u-ième canal relative au i-ième symbole $b_i^u$, suivies par $(n-i) \times Q$ autres composantes à zéro. Les décalages temporels de réception selon les différents canaux, en nombres de chips, se traduisent par des décalages correspondants des W échantillons de la réponse impulsionnelle des canaux le long du vecteur $H_i^u$.

Le récepteur le plus couramment utilisé, dit récepteur en râteau ou "rake", utilise un ou plusieurs filtres adaptés pour estimer la valeur des symboles transmis sur chaque canal à partir d'une estimation de la réponse impulsionnelle du canal selon un ou plusieurs trajets de propagation.

L'opération effectuée par de tels récepteurs revient à effectuer le produit matriciel :

$$Z = \hat{A}^* . Y \qquad (7)$$

où $\hat{A}^*$ est la transposée conjuguée d'une estimation $\hat{A} = (\hat{A}_1, \hat{A}_2, ..., \hat{A}_n)$ de la matrice A, les matrices $\hat{A}_i$ découlant des réponses impulsionnelles estimées en appliquant les relations (4) et (5).

Les $n \times U$ composantes $Z_i^u$ du vecteur Z sont des estimations souples respectives des $n \times U$ symboles $b_i^u$ du vecteur b. Si les décodages effectués en aval admettent des estimations souples en entrée, on peut utiliser directement les composantes du vecteur Z. Sinon, le signe de ces composantes est pris pour former les estimations dures des symboles.

Le récepteur à filtre adapté est optimal lorsque les codes généralisés (vecteurs $\Omega_i^u$ ) sont orthogonaux deux à deux, c'est-à-dire lorsque la matrice de corrélation R = A*.A est diagonale. En général, les systèmes adoptent des codes d'étalement orthogonaux deux à deux et ayant de bonnes propriétés d'autocorrélation, ce qui permet de vérifier cette condition en première approximation.

Toutefois, lorsqu'on prend en compte la réponse impulsionnelle du canal, la condition d'orthogonalité n'est plus remplie. L'approximation ci-dessus devient mauvaise particulièrement en présence de trajets multiples de propagation.

Certains récepteurs corrigent a posteriori les estimations souples des symboles issues du récepteur à filtres adaptés en tenant compte de l'interférence entre les utilisateurs et/ou de l'interférence entre symboles sur un même canal, ce qui améliore sensiblement les performances. Une telle méthode, basée sur un algorithme dit MFPIC ("Matched Filter Parallel Interference Cancellation"), est décrite dans WO 01/99301. Elle a pour avantage de ne pas trop accroître la complexité globale des calculs par rapport au récepteur "rake" traditionnel. Cependant, ces corrections a posteriori font suite à une optimisation du système (3) reposant sur l'approximation ci-dessus.

Cet algorithme MFPIC appartient à la classe des algorithmes de détection multi-utilisateurs (MUD, "Multi-User Detection") qui offrent de meilleures performances que le simple récepteur à filtres adaptés. Il existe dans cette classe des algorithmes plus précis que le MFPIC, en ce qu'ils peuvent prendre en compte des termes de la matrice R plus éloignés de sa diagonale.

Un bon exemple d'algorithme MUD utilisable dans un tel contexte est l'algorithme SDP décrit dans l'article de M. Abdi, et al., "Semidefinite Positive Relaxation of the Maximum-Likelihood Criterion Applied to Multiuser Detection in a CDMA Context", IEEE Signal Processing Letters, Vol. 9, No. 6, juin 2002, pp. 165-167.

Les meilleures performances de ces algorithmes MUD sont obtenues au prix d'une complexité fortement augmentée. En général, leur complexité est plus que linéaire en la taille n×U du problème à résoudre, ce qui les rend très coûteux en comparaison avec des récepteurs plus classiques tels que le "rake" ou le MFPIC.

Un but de la présente invention est de trouver un bon compromis entre les performances et la complexité d'un récepteur CDMA.

L'invention propose ainsi un procédé de traitement d'un signal reçu par l'intermédiaire d'une interface radio, comportant des contributions de plusieurs canaux multiplexés par des codes d'étalement respectifs. Ce procédé comprend les étapes suivantes:

/a/ estimer des paramètres de réponse des canaux multiplexés;
/b/ calculer des estimations souples de symboles transmis sur les canaux multiplexés, en fonction du signal reçu et des paramètres de réponse estimés;
/c/ répartir les symboles dont des estimations souples viennent d'être calculées entre un premier ensemble de symboles vérifiant un critère de confiance appliqué auxdites estimations souples et un second ensemble de symboles ne vérifiant pas le critère de confiance;
/d/ déterminer un signal modifié en retranchant du signal soumis au précédent calcul d'estimations souples des contributions estimées correspondant respectivement aux symboles du premier ensemble; et
/e/ calculer de nouvelles estimations souples des symboles du second ensemble seulement, en fonction du signal modifié et des paramètres de réponse estimés.

Les symboles pour lesquels le premier calcul procure des estimations suffisamment fiables ne sont plus à estimer dans le second calcul. Leur contribution au signal est retranchée pour prendre en compte l'interférence qu'ils engendrent pour les autres symboles.

On peut employer divers algorithmes de détection pour les calculs successifs d'estimations souples.

Dans une réalisation préférée du procédé, l'étape /e/ est exécutée selon un algorithme de détection de nature plus complexe que l'étape /b/, notamment selon un algorithme de détection multi-utilisateurs. Le procédé profite alors des performances d'un algorithme complexe de type MUD, mais en appliquant celui-ci à un problème de taille plus petite que celui faisant l'objet du premier calcul.

Le procédé permet ainsi de réaliser un compromis entre la performance de la détection des symboles et la complexité des calculs requis. Dans la conception ou la configuration du récepteur, on peut privilégier la performance ou la complexité dans ce compromis, par un réglage approprié du critère de confiance employé.

Il est d'autre part possible de réitérer une fois ou plus la séquence des étapes /c/ à /e/. Le nombre plus ou moins grand d'itérations et/ou la sévérité du critère de confiance appliqué à chaque itération (ce critère de confiance peut varier d'une itération à la suivante) sont des paramètres qui peuvent aussi être réglés en fonction du compromis performances/complexité recherché.

Un autre aspect de la présente invention se rapporte à un dispositif de traitement d'un signal reçu par l'intermédiaire d'une interface radio, comportant des contributions de plusieurs canaux multiplexés par des codes d'étalement respectifs. Ce dispositif comprend des moyens d'estimation de paramètres de réponse des canaux multiplexés, des premiers moyens de calcul d'estimations souples de symboles transmis sur les canaux multiplexés, en fonction du signal reçu et des paramètres de réponse estimés, des moyens de répartition des symboles entre un premier ensemble de symboles vérifiant un critère de confiance appliqué aux estimations souples produites par les premiers moyens de calcul et un second ensemble de symboles ne vérifiant pas le critère de confiance, des moyens de détermination d'un signal modifié en retranchant du signal reçu des contributions estimées correspondant respectivement aux symboles du premier ensemble, et des seconds moyens de calcul de nouvelles estimations souples des symboles du second ensemble seulement, en fonction du signal modifié et des paramètres de réponse estimés.

Un tel dispositif peut notamment être incorporé à une station de base d'un système de radiocommunication CDMA.

Lorsque plusieurs itérations sont prévues, le dispositif comprend en outre des seconds moyens de répartition des symboles du second ensemble entre un premier sous-ensemble de symboles vérifiant un second critère de confiance appliqué aux estimations souples produites par les seconds moyens de calcul et un second sous-ensemble de symboles ne vérifiant pas le second critère de confiance, des moyens de détermination d'un second signal modifié en retranchant du signal modifié qui a été soumis aux seconds moyens de calcul des contributions estimées correspondant respectivement aux symboles du premier sous-ensemble, et des troisièmes moyens de calcul de nouvelles estimations souples des symboles du second sous-ensemble seulement, en fonction du second signal modifié et des paramètres de réponse estimés.

Un autre aspect de la présente invention se rapporte à un programme d'ordinateur à installer dans un récepteur de radiocommunication, le programme comprenant des instructions pour mettre en oeuvre un procédé tel que défini ci-dessus lors d'une exécution du programme par une unité de traitement de signal du récepteur.

D'autres particularités et avantages de la présente invention apparaîtront dans la description ci-après d'exemples de réalisation non limitatifs, en référence aux dessins annexés, dans lesquels :

-    la figure 1 est un schéma synoptique d'un exemple de dispositif de réception selon l'invention ; et

-    la figure 2 est un organigramme d'un exemple de procédé selon l'invention.

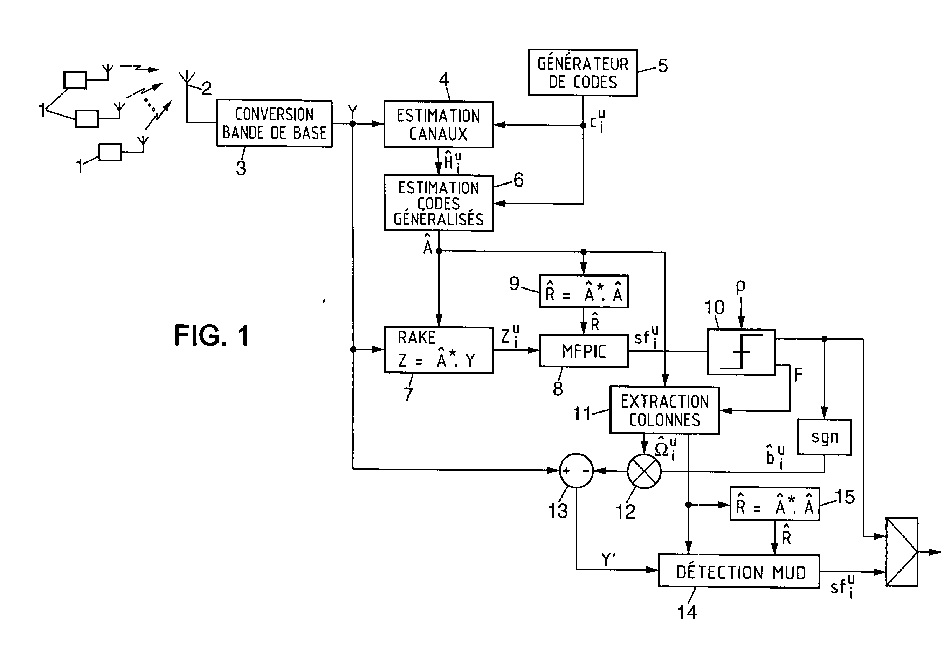

Le dispositif représenté sur la figure 1 fait partie de l'étage de réception d'une station de radiocommunication apte à communiquer avec plusieurs stations distantes 1.

Les canaux montants utilisés par ces stations distantes 1 sont multiplexés par la technique CDMA, de sorte que le signal radio capté par l'antenne 2, ramené en bande de base, peut être représenté sous la forme (1 )-(2) pour U canaux multiplexés en provenance de V stations ($1 \le V \le U$).

La station incorporant le dispositif est par exemple une station de base d'un système de radiocommunication cellulaire de troisième génération de type UMTS (« Universal Mobile Telecommunication System »).

Sur la figure 1, l'unité 3 représente schématiquement les modules effectuant de façon classique les prétraitements de réception du signal (amplification, filtrages, conversion en bande de base, échantillonnage à la fréquence des chips). Cette unité 3 délivre des blocs Y de $n\times Q+W-1$ échantillons, correspondant à des blocs de n symboles émis simultanément sur les U canaux. Si les blocs de n symboles se succèdent sans interruption sur les canaux, il y a un recouvrement de W échantillons (chips) entre les blocs Y successifs, correspondant à la durée de la réponse impulsionnelle.

Les blocs de signal reçu Y sont fournis à un module 4 qui estime les réponses impulsionnelles $\hat{H}_i^u$ des U canaux CDMA multiplexés, à l'aide de corrélations avec les codes d'étalement produits par un générateur de codes pseudo-aléatoires 5 ($1 \le u \le U$, $1 \le i \le n$). Le module 6 estime alors la matrice Â des codes généralisés selon (4) et (5), c'est-à-dire que sa [$(i-1)\times U + u$]-ième colonne est donnée par $\hat{\Omega}_i^u = M_i^u.H_i^u$.

A l'aide des paramètres de la matrice Â, un premier calcul d'estimations souples est appliqué au bloc Y. Dans l'exemple représenté, ce premier calcul est opéré par les modules 7 à 9 selon l'algorithme MFPIC décrit dans WO 01/99301. Le module 7 effectue une détection classique de type "rake" sur chaque canal, selon la relation (7) ci-dessus. Il produit des premières estimations souples $Z_i^u$ des symboles transmis $b_i^u$. Ces premières estimations $Z_i^u$ pourraient être utilisées directement, mais on améliore leur représentativité en les affinant dans le module 8, qui applique la correction prévue dans l'algorithme MFPIC pour tenir compte de l'interférence inter-symboles et/ou entre utilisateurs. Dans le cas où les symboles transmis sont des bits, cette correction s'exprime par:

$$sf_i^u = Z_i^u - \sum_{\substack{j=1 \\ j\neq i}}^{n} \hat{R}_{i,j}^{u,u}.sgn\left(Z_j^u\right) - \sum_{\substack{v=1 \\ v\neq u}}^{U} \sum_{j=1}^{n} \hat{R}_{i,j}^{u,v}.sgn\left(Z_j^v\right) \qquad (8)$$

où sgn(.) désigne la fonction signe à valeurs dans {-1, +1} et $\hat{R}_{i,j}^{u,v}$ désigne le terme situé à la [(i-1)×U + u]-ième ligne et à la [(j-1)×U + v]-ième colonne de la matrice de corrélation R = Â*.Â calculée par le module 9.

Le premier terme soustrait dans (8) correspond à de l'interférence inter-symboles sur le u-ième canal tandis que le second terme soustrait correspond à de l'interférence entre canaux. Les estimations $sf_i^u$ produites par le module 8 sont des approximations des "softbits", à un coefficient multiplicatif $4/\sigma^2$ près, σ désignant la puissance du bruit additif capté, dont une estimation est classiquement rendue disponible par le module de sondage 4. Le signe de $sf_i^u$ forme une estimation dure du bit $b_i^u$, tandis que sa valeur absolue mesure la vraisemblance de cette estimation.

Selon l'invention, ces estimations souples $sf_i^u$ sont examinées par un module 10 de manière à identifier un ensemble F de symboles dont les estimations sont considérées comme les plus fiables.

A titre d'exemple, le module 10 trie les estimations $sf_i^u$ dans l'ordre des valeurs absolues décroissantes et place dans l'ensemble F les K % des symboles dont les estimations sont classées les premières. Une autre possibilité est de placer dans l'ensemble F les symboles dont les estimations $sf_i^u$ ont une valeur absolue supérieure à un seuil de confiance ρ qui peut être pris proportionnel à $4/\sigma^2$. Le seuil ρ ou le pourcentage K peut être rendu adaptatif, par exemple en fonction du rapport signal-sur-bruit observé par le récepteur.

Pour les symboles de l'ensemble F ainsi déterminé, le dsipositif délivrera les estimations souples $sf_i^u$ produites par le module 8 ou des estimations dures $b_i^u$ constituées par leurs signes, selon les besoins des circuits de traitement situés en aval.

Les symboles qui ne font pas partie de cet ensemble vont faire l'objet d'un second calcul d'estimations souples qui utilise de préférence un algorithme MUD.

Les colonnes de la matrice des codes généralisés Â sont triées par un module 11. Chaque colonne $\hat{\Omega}_i^u$ associée à un symbole de l'ensemble F est extraite de Â pour être multipliée par l'estimation dure $\hat{b}_i^u$ de ce symbole (multiplieur 12), ce qui donne une estimation de la contribution de l'interférence causée par ce symbole sur les autres. Cette contribution $\hat{b}_i^u.\hat{\Omega}_i^u$ est soustraite du vecteur Y représentant le signal d'entrée par le soustracteur 13. Une telle soustraction est effectuée pour chaque symbole de l'ensemble F:

$$Y' = Y - \sum_{(i,u)\in F} \hat{b}_i^u.\hat{\Omega}_i^u \qquad (9)$$

$$= \sum_{i=1}^{n}\sum_{u=1}^{U} b_i^u.\Omega_i^u + N - \sum_{(i,u)\in F} \hat{b}_i^u.\hat{\Omega}_i^u \qquad (10)$$

$$\approx \sum_{(i,u)\notin F} \hat{b}_i^u.\hat{\Omega}_i^u + N \qquad (11)$$

La relation (11) montre que la prise en compte de des contributions des symboles bien estimés réduit la taille du système à traiter de n×U à n×U - card(F). La réduction de taille est très appréciable si suffisamment de symboles ont pu être bien estimés lors de la première passe. Ceci facilite le recours à un algorithme de nature plus complexe pour la seconde estimation des symboles restants, notamment à un algorithme MUD.

Cette seconde estimation est effectuée par le module de détection 14 de la figure 1, auquel est soumis le signal modifié Y'. Chaque vecteur colonne $\Omega_i^u$ avec (i,u) ∈ F est enlevé de la matrice Â par le module 11 pour former une matrice de codes généralisés réduite d'après laquelle le module 15 obtient la matrice de corrélation réduite $\hat{R}$ = $\hat{A}^*.\hat{A}$ . Le vecteur Y' et les matrices réduites Â et R constituent les données d'entrée de l'algorithme MUD mis en oeuvre par le module 14, qui est par exemple l'algorithme SDP précédemment cité.

Les estimations souples $sf_i^u$ (ou dures) produites par le module MUD 14 sont finalement combinées aux estimations déterminées de manière suffisamment fiable par l'algorithme MFPIC au cours de la première passe, pour reconstituer l'ensemble des données démodulées.

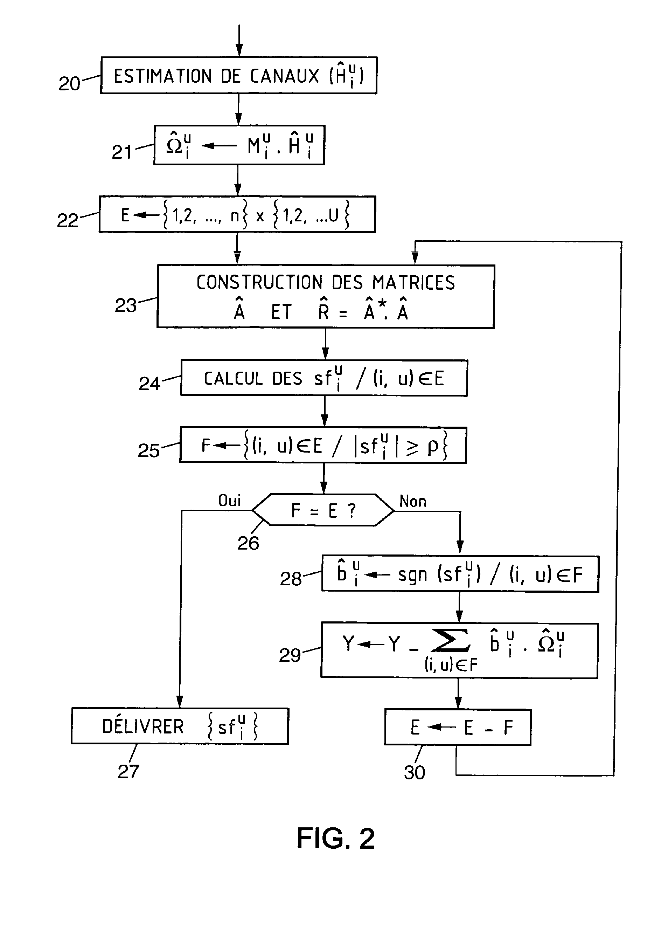

Les estimations souples $sf_i^u$ produites par ce module MUD 14 peuvent aussi faire l'objet d'un tri entre estimations fiables et estimations peu fiables, ces dernières faisant alors l'objet d'un nouveau calcul d'estimations. Ce processus de tri et de réestimation peut être réitéré un certain nombre de fois. Une telle procédure itérative est illustrée par la figure 2.

Les deux premières étapes 20 et 21, préalables aux itérations, consistent en l'estimation classique des réponses des canaux et des codes généralisés $\Omega_i^u$ (opérations des modules 4 et 6 de la figure 1). A l'étape 22, l'ensemble E des symboles à estimer au cours de la prochaine itération est initialisé au produit cartésien $\{1,2,...,n\} \times \{1,2,...,U\}$ correspondant à la totalité des symboles transmis au titre du bloc courant sur les canaux à traiter.

Dans chaque itération, la première étape 23 consiste à assembler les vecteurs colonne $\hat{\Omega}_i^u$ associés aux symboles de l'ensemble E pour former la matrice de codes Â qui sera utilisée pour la détection suivante, et à calculer la matrice de corrélation $R = \hat{A}^*.\hat{A}$ . La détection est opérée à l'étape suivante 24 sur la base du bloc Y à l'aide des matrices Â et R. A titre d'exemple, l'algorithme employé à l'étape 24 est le MFPIC dans la première itération et le SDP dans chaque itération suivante.

Les estimations souples obtenues à l'étape 24 sont soumises au critère de confiance pour construire, à l'étape 25, l'ensemble F des index (i,u) des symboles les plus fiables, qui sont par exemple les index (i,u) de l'ensemble E tels que $|sf_i^u| \geq \rho$.

Si toutes les estimations sont jugées suffisamment fiables (F = E lors du test 26), la procédure de détection est terminée et les estimations souples $sf_i^u$ qui ont été calculées peuvent être délivrées à l'étape 27. Le seuil $\rho$ peut varier au fur et à mesure des itérations. Il peut notamment décroître pour rendre le critère de confiance de moins en moins sévère. Pour limiter la procédure à un nombre maximum X d'itérations, on peut fixer $\rho = 0$ pour la X-ième itération.

Si certaines estimations sont insuffisamment fiables (F ≠ E au test 26), les estimations dures $b_i^u$ des symboles de F sont déterminées à l'étape 28. Les contributions estimées $b_i^u.\Omega_i^u$ de ces symboles sont soustraites du bloc Y à l'étape 29 (opération des modules 12 et 13 de la figure 1). Pour initialiser l'itération suivante, l'ensemble E des symboles à estimer est mis à jour à l'étape 30 en lui retirant les symboles correctement estimés de l'ensemble F.

Une procédure comme celle illustrée par la figure 2 peut être mise en oeuvre en programmant un processeur de traitement de signaux numériques prévu dans le récepteur radio.

## Revendications

**1.** Procédé de traitement d'un signal (Y) reçu par l'intermédiaire d'une interface radio, comportant des contributions de plusieurs canaux multiplexés par des codes d'étalement respectifs, ce procédé comprenant les étapes suivantes:

/a/ estimer des paramètres de réponse des canaux multiplexés;

/b/ calculer des estimations souples de symboles transmis sur les canaux multiplexés, en fonction du signal reçu et des paramètres de réponse estimés;

/c/ répartir les symboles dont des estimations souples viennent d'être calculées entre un premier ensemble de symboles vérifiant un critère de confiance appliqué auxdites estimations souples et un second ensemble de symboles ne vérifiant pas le critère de confiance;

/d/ déterminer un signal modifié en retranchant du signal soumis au précédent calcul d'estimations souples des contributions estimées correspondant respectivement aux symboles du premier ensemble; et

/e/ calculer de nouvelles estimations souples des symboles du second ensemble seulement, en fonction du signal modifié et des paramètres de réponse estimés.

**2.** Procédé selon la revendication 1, dans lequel l'étape /e/ est exécutée selon un algorithme de détection de nature plus complexe que l'étape /b/.

**3.** Procédé selon la revendication 1 ou 2, dans lequel l'étape /e/ est exécutée selon un algorithme de détection multi-utilisateurs.

**4.** Procédé selon l'une quelconque des revendications précédentes, dans lequel on réitère au moins une fois la séquence des étapes /c/ à /e/.

**5.** Procédé selon la revendication 4, dans lequel le critère de confiance varie d'une itération de la séquence des étapes /c/ à /e/ à la suivante.

**6.** Procédé selon l'une quelconque des revendications précédentes, dans lequel le critère de confiance est exprimé comme une proportion des estimations souples les plus faibles.

**7.** Procédé selon l'une quelconque des revendications 1 à 5, dans lequel le critère de confiance est exprimé comme un seuil de confiance à atteindre par les estimations souples des symboles.

**8.** Dispositif de traitement d'un signal (Y) reçu par l'intermédiaire d'une interface radio, comportant des contributions de plusieurs canaux multiplexés par des codes d'étalement respectifs, ce dispositif comprenant des moyens (4-6) d'estimation de paramètres de réponse des canaux multiplexés, des premiers moyens (7-9) de calcul d'estimations souples de symboles transmis sur les canaux multiplexés, en fonction du signal reçu et des paramètres de réponse estimés, des moyens (10) de répartition des symboles entre un premier ensemble de symboles vérifiant un critère de confiance appliqué aux estimations souples produites par les premiers moyens de calcul et un second ensemble de symboles ne vérifiant pas le critère de confiance, des moyens (12-13) de détermination d'un signal modifié (Y') en retranchant du signal reçu des contributions estimées correspondant respectivement aux symboles du premier ensemble, et des seconds moyens (14) de calcul de nouvelles estimations souples des symboles du second ensemble seulement, en fonction du signal modifié et des paramètres de réponse estimés.

**9.** Dispositif selon la revendication 8, dans lequel les seconds moyens de calcul (14) sont agencés pour appliquer un algorithme de détection de nature plus complexe que les premiers moyens de calcul (7-9).

**10.** Dispositif selon la revendication 8 ou 9, dans lequel les seconds moyens de calcul (14) sont agencés pour appliquer un algorithme de détection multi-utilisateurs.

**11.** Dispositif selon l'une quelconque des revendications 8 à 10, comprenant en outre des seconds moyens de répartition des symboles du second ensemble entre un premier sous-ensemble de symboles vérifiant un second critère de confiance appliqué aux estimations souples produites par les seconds moyens de calcul et un second sous-ensemble de symboles ne vérifiant pas le second critère de confiance, des moyens de détermination d'un second signal modifié en retranchant du signal modifié qui a été soumis aux seconds moyens de calcul des contributions estimées correspondant respectivement aux symboles du premier sous-ensemble, et des troisièmes moyens de calcul de nouvelles estimations souples des symboles du second sous-ensemble seulement, en fonction du second signal modifié et des paramètres de réponse estimés.

**12.** Programme d'ordinateur à installer dans un récepteur de radiocommunication, le programme comprenant des instructions pour mettre en oeuvre un procédé selon l'une quelconque des revendications 1 à 7 lors d'une exécution du programme par une unité de traitement de signal du récepteur.

FIG. 1

20 — ESTIMATION DE CANAUX $(\hat{H}_i^u)$

21 — $\hat{\Omega}_i^u \longleftarrow M_i^u . \hat{H}_i^u$

22 — $E \longleftarrow \left\{ 1,2, ..., n \right\} \times \left\{ 1,2, ...U \right\}$

23 — CONSTRUCTION DES MATRICES
$\hat{A}$   ET   $\hat{R} = \hat{A}^* . \hat{A}$

24 — CALCUL DES $sf_i^u$ / $(i, u) \in E$

25 — $F \longleftarrow \left\{ (i, u) \in E \ / \ |sf_i^u| \geqslant \rho \right\}$

Oui        26   $F = E$ ?        Non

28 — $\hat{b}_i^u \longleftarrow sgn \ (sf_i^u) \ / \ (i, u) \in F$

29 — $Y \longleftarrow Y - \sum_{(i, u) \in F} \hat{b}_i^u . \hat{\Omega}_i^u$

DÉLIVRER $\left\{ sf_i^u \right\}$

27

$E \longleftarrow E - F$

30

# FIG. 2

10

))) **Office européen
des brevets** **RAPPORT DE RECHERCHE EUROPEENNE** Numéro de la demande

EP 04 29 0210

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | ZHA W ET AL: "SOFT-DECISION SUCCESSIVE INTERFERENCE CANCELLATION CDMA RECEIVER WITH AMPLITUDE AVERAGING AND ROBUST TO TIMING ERRORS" GLOBECOM'01. 2001 IEEE GLOBAL TELECOMMUNICATIONS CONFERENCE. SAN ANTONIO, TX, NOV. 25 - 29, 2001, IEEE GLOBAL TELECOMMUNICATIONS CONFERENCE, NEW YORK, NY: IEEE, US, vol. 2 OF 6, 25 novembre 2001 (2001-11-25), pages 743-747, XP001099204 ISBN: 0-7803-7206-9 * page 744, colonne de droite, ligne 36 - ligne 41 * | 1,8,12 | H04B1/707 |
| D,A | --- WO 01/99301 A (NORTEL NETWORKS LTD ;ABDI MOUSSA (FR); JARD ALEXANDRE (FR); EL NAH) 27 décembre 2001 (2001-12-27) * page 10, ligne 11 - page 11, ligne 19; figure 1 * ----- | 1,8,12 | |
| | | | DOMAINES TECHNIQUES RECHERCHES (Int.Cl.7) H04B |

Le présent rapport a été établi pour toutes les revendications

| Lieu de la recherche | Date d'achèvement de la recherche | Examinateur |
|---|---|---|
| BERLIN | 4 juin 2004 | Augarde, E |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
....................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 04 29 0210

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

04-06-2004

| Document brevet cité au rapport de recherche | Date de publication | Membre(s) de la famille de brevet(s) | Date de publication |
|---|---|---|---|
| WO 0199301 A | 27-12-2001 | FR 2810820 A1 | 28-12-2001 |
| | | AU 6920901 A | 02-01-2002 |
| | | EP 1293048 A1 | 19-03-2003 |
| | | WO 0199301 A1 | 27-12-2001 |
| | | US 2003091100 A1 | 15-05-2003 |

EPO FORM P0460

Pour tout renseignement concernant cette annexe : voir Journal Officiel de l'Office européen des brevets, No.12/82